# EUROPEAN PATENT APPLICATION

(11) **EP 4 794 426 A1**
(43) Date of publication of application: **19.08.2026**
(21) Application number: 24877063.8
(22) Date of filing: 01.10.2024
(51) Int. Cl.: H04W 72/232, H04L 27/26, H04W 72/044, H04W 72/0453

(54) **TERMINAL, WIRELESS COMMUNICATION METHOD, AND BASE STATION**

(30) Priority: 10.10.2023 JP 2023174990
(71) Applicant: NTT DOCOMO, INC., Tokyo 100-6150 (JP)
(72) Inventor: MATSUMURA, Yuki, Tokyo 100-6150 (JP); NAGATA, Satoshi, Tokyo 100-6150 (JP)
(74) Representative: Hoffmann Eitle
(86) International application number: PCT/JP2024/035141
(87) International publication number: WO 2025/079465

(57) **Abstract**

A terminal according to one aspect of the present disclosure includes: a receiving section that receives a specific downlink control channel (DCI) format for scheduling a shared channel; and a control section that applies a specific frequency domain (FD)-orthogonal cover code (OCC) with length 4 to a demodulation reference signal (DMRS) of the shared channel. The specific DCI format is a DCI format other than DCI formats 1_1, 1_2, 0_1, and 0_2.

## Description

### Technical Field

The present disclosure relates to a terminal, a radio communication method, and a base station in next-generation mobile communication systems.

### Background Art

In a Universal Mobile Telecommunications System (UMTS) network, the specifications of Long Term Evolution (LTE) have been drafted for the purpose of further increasing high speed data rates, providing lower latency and so on (Non-Patent Literature 1). In addition, for the purpose of further high capacity, advancement and the like of LTE (Third Generation Partnership Project (3GPP (registered trademark)) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

For orthogonalization of a layer, and the like, a reference signal (for example, demodulation reference signal (DMRS)) with a plurality of ports is used.

For future radio communication systems, it is under study to increase the number of DMRS ports as compared with that of an existing specification. A configuration of a DMRS of this case has not been studied sufficiently. Unless a DMRS is appropriately configured, communication throughput/communication quality may deteriorate.

Thus, an object of the present disclosure is to provide a terminal, a radio communication method, and a base station that apply an appropriate DMRS.

### Solution to Problem

A terminal according to one aspect of the present disclosure includes: a receiving section that receives a specific downlink control channel (DCI) format for scheduling a shared channel; and a control section that applies a specific frequency domain (FD)-orthogonal cover code (OCC) with length 4 to a demodulation reference signal (DMRS) of the shared channel. The specific DCI format is a DCI format other than DCI formats 1_1, 1_2, 0_1, and 0_2.

### Advantageous Effects of Invention

According to one aspect of the present disclosure, it is possible to apply an appropriate DMRS.

### Brief Description of Drawings

[FIG. 1] FIGS. 1A and 1B show examples of an existing DMRS port table for DMRS configuration type 1/2 for PDSCH.
[FIG. 2] FIGS. 2A and 2B show examples of an existing DMRS port table for DMRS configuration type 1/2 for PUSCH.
[FIG. 3] FIGS. 3A and 3B are diagrams to show examples of association between CDM groups, DMRS ports, and OCCs in enhanced type 1/enhanced type 2.
[FIG. 4] FIG. 4 is a diagram to show an example of parameters for PDSCH DMRS configuration type 1.
[FIG. 5] FIG. 5 is a diagram to show an example of parameters for PDSCH DMRS configuration type 2.
[FIG. 6] FIG. 6 is a diagram to show an example of parameters for PUSCH DMRS configuration type 1.
[FIG. 7] FIG. 7 is a diagram to show an example of parameters for PUSCH DMRS configuration type 2.
[FIG. 8] FIG. 8 is a diagram to show an example of a schematic structure of a radio communication system according to one embodiment.
[FIG. 9] FIG. 9 is a diagram to show an example of a structure of a base station according to one embodiment.
[FIG. 10] FIG. 10 is a diagram to show an example of a structure of a user terminal according to one embodiment.
[FIG. 11] FIG. 11 is a diagram to show an example of a hardware structure of the base station and the user terminal according to one embodiment.
[FIG. 12] FIG. 12 is a diagram to show an example of a vehicle according to one embodiment.

### Description of Embodiments

### (DMRS)

A front-loaded demodulation reference signal (DMRS) is the first DMRS (in the first symbol or a symbol near the first symbol) for faster demodulation. An additional DMRS can be configured by RRC for a high-speed moving terminal (user terminal, User Equipment (UE)) or a high modulation and coding scheme (MCS)/rank. A frequency location of the additional DMRS is the same as that of the front-loaded DMRS.

DMRS mapping type A or B is configured for a time domain. In DMRS mapping type A, DMRS location l_0 is counted by a symbol index in a slot. l_0 is configured by a parameter (dmrs-TypeA-Position) in an MIB or a common serving cell configuration (ServingCellConfigCommon). DMRS location 0 (reference point l) means the first symbol of the slot or each frequency hop. In DMRS mapping type B, DMRS location l_0 is counted by a symbol index in a PDSCH/PUSCH. l_0 is always 0. DMRS location 0 (reference point l) means the first symbol of the PDSCH/PUSCH or each frequency hop.

The DMRS location is defined by a table in a specification, and depends on duration of the PDSCH/PUSCH. The location of the additional DMRS is fixed.

(PDSCH/PUSCH) DMRS configuration type 1 or 2 is configured for a frequency domain. DMRS configuration type 1 includes a comb structure, and is applicable to both CP-OFDM (transport precoding = disabled) and DFT-S-OFDM (transport precoding = enabled). DMRS configuration type 2 is applicable to only CP-OFDM.

A single-symbol DMRS or a double-symbol DMRS is configured.

The single-symbol DMRS is normally used (is mandatory in Rel. 15). In the single-symbol DMRS, the number of additional DMRSs (symbols) is {0, 1, 2, 3}. The single-symbol DMRS supports both a case of enabled frequency hopping and a case of disabled frequency hopping. The single-symbol DMRS is used if a maximum number (maxLength) in uplink DMRS configuration (DMRS-UplinkConfig) is not configured.

A double-symbol DMRS is used for more DMRS ports (especially for Multi User Multi Input Multi Output (MU-MIMO)). In the double-symbol DMRS, the number of additional DMRSs (symbols) is {0, 1}. The double-symbol DMRS supports a case of disabled frequency hopping. If the maximum number (maxLength) in the uplink DMRS configuration (DMRS-UplinkConfig) is 2 (len2), which of the single-symbol DMRS or the double-symbol DMRS is to be used is determined by DCI or a configured grant.

Thus, as possible DMRS configuration patterns, the following combinations are conceivable.
- DMRS configuration type 1, DMRS mapping type A, single-symbol DMRS
- DMRS configuration type 1, DMRS mapping type A, double-symbol DMRS
- DMRS configuration type 1, DMRS mapping type B, single-symbol DMRS
- DMRS configuration type 1, DMRS mapping type B, double-symbol DMRS
- DMRS configuration type 2, DMRS mapping type A, single-symbol DMRS
- DMRS configuration type 2, DMRS mapping type A, double-symbol DMRS
- DMRS configuration type 2, DMRS mapping type B, single-symbol DMRS
- DMRS configuration type 2, DMRS mapping type B, double-symbol DMRS

A plurality of DMRS ports mapped to the same resource element (RE, time and frequency resources) are referred to as a DMRS code division multiplexing (CDM) group.

For DMRS configuration type 1 and the single-symbol DMRS, four DMRS ports can be used. In each DMRS CDM group, two DMRS ports are multiplexed by a length-2 FD OCC (Frequency Domain OCC). In a plurality of DMRS CDM groups (two DMRS CDM groups), two DMRS ports are multiplexed by frequency division multiplexing (FDM).

For DMRS configuration type 1 and the double-symbol DMRS, eight DMRS ports can be used. In each DMRS CDM group, two DMRS ports are multiplexed by a length-2 FD OCC, and two DMRS ports are multiplexed by a TD OCC (Time Domain OCC). In a plurality of DMRS CDM groups (two DMRS CDM groups), two DMRS ports are multiplexed by FDM.

For DMRS configuration type 2 and the single-symbol DMRS, six DMRS ports can be used. In each DMRS CDM group, two DMRS ports are multiplexed by a length-2 FD OCC. In a plurality of DMRS CDM groups (three DMRS CDM groups), three DMRS ports are multiplexed by FDM.

For DMRS configuration type 2 and the double-symbol DMRS, twelve DMRS ports can be used. In each DMRS CDM group, two DMRS ports are multiplexed by a lengh-2 FD OCC, and two DMRS ports are multiplexed by a TD OCC. In a plurality of DMRS CDM groups (three DMRS CDM groups), three DMRS ports are multiplexed by FDM.

An example of DMRS mapping type B is described here, but the same applies to DMRS mapping type A.

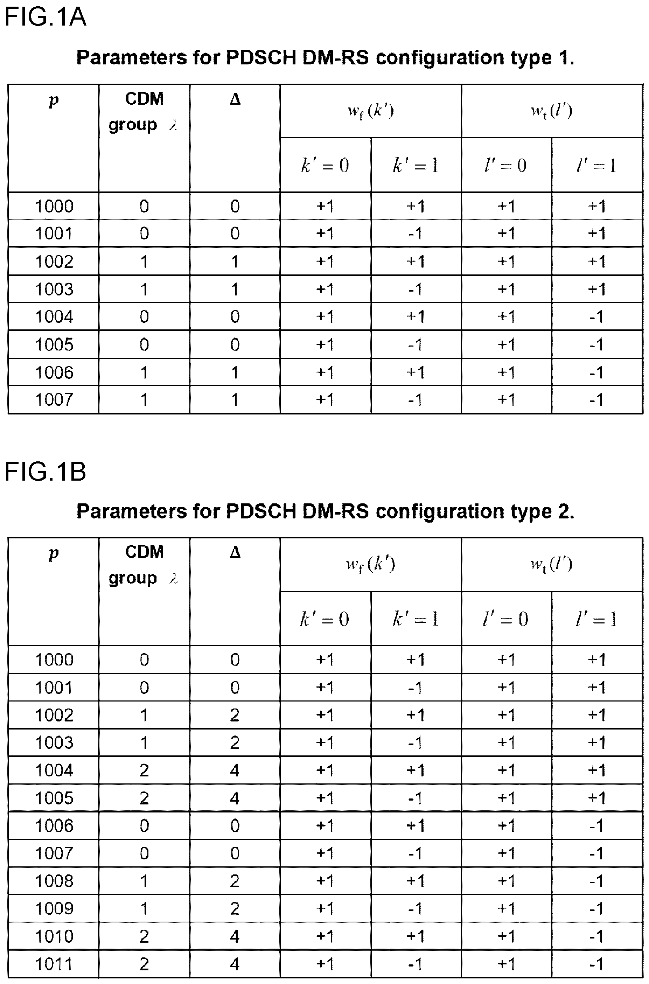

In parameters for a PDSCH DMRS (existing table, existing DMRS port table, FIG. 1), DMRS ports 1000 to 1007 and DMRS ports 1000 to 1011 can be used for DMRS configuration type 1 and DMRS configuration type 2, respectively.

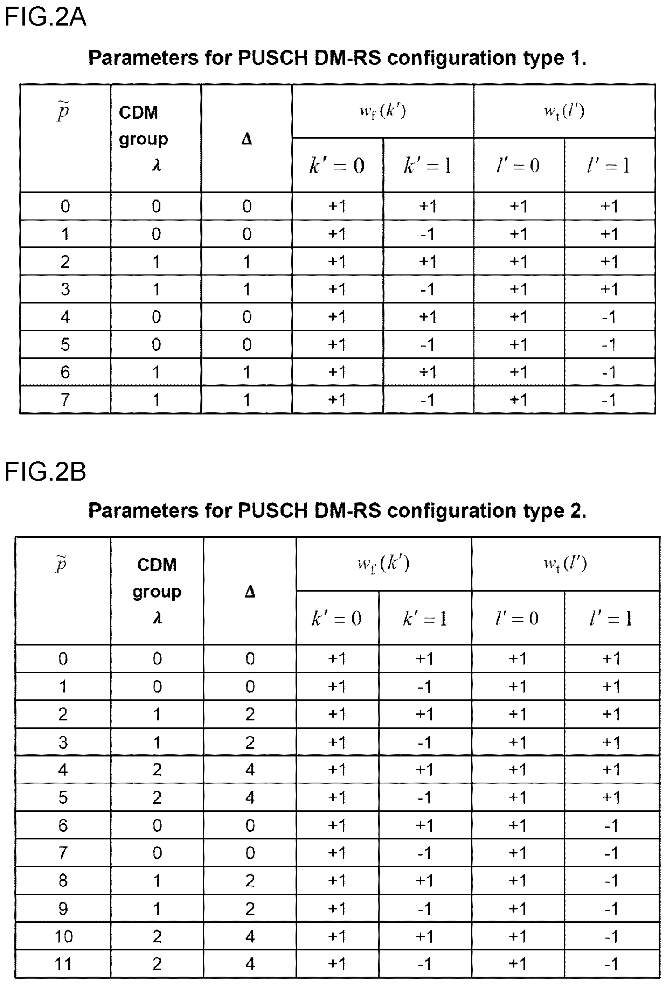

In parameters for a PUSCH DMRS (existing table, existing DMRS port table, FIG. 2), DMRS ports 0 to 7 and DMRS ports 0 to 11 can be used for DMRS configuration type 1 and DMRS configuration type 2, respectively.

### (Reference Signal Port)

For orthogonalization of a MIMO layer, and the like, reference signals (for example, demodulation reference signals (DMRSs), CSI-RSs) with a plurality of ports are used.

For example, for single user MIMO (SU-MIMO), DMRS ports/CSI-RS ports that are different between layers may be configured. For multi user MIMO (MU-MIMO), DMRS ports/CSI-RS ports that are different between layers in one UE and different between UEs may be configured.

Note that it is expected that using the number of CSI-RS ports greater than the number of layers used for data enables more accurate channel state measurement based on this CSI-RS, thereby contributing to throughput enhancement.

In Rel-15 NR, for DMRSs with a plurality of ports, up to 8 ports and up to 12 ports are supported in a case of type 1 DMRSs (in other words, DMRS configuration type 1) and a case of type 2 DMRSs (in other words, DMRS configuration type 2), respectively, by using frequency division multiplexing (FDM), a frequency domain orthogonal cover code (FD-OCC), a time domain OCC (TD-OCC), and the like.

In Rel-15 NR, as the above-described FDM, a comb-shaped transmission frequency pattern (comb-shaped resource set) is used. As the above-described FD-OCC, a cyclic shift (CS) is used. The above-described TD-OCC can be applied only to the double-symbol DMRS.

In the present disclosure, an OCC, an orthogonal code, orthogonalization, and a cyclic shift may be interchangeably interpreted.

Note that a DMRS type may be referred to as a DMRS configuration type.

A DMRS to which resource mapping in units of two consecutive (adjacent) symbols is applied, from among DMRSs, may be referred to as a double-symbol DMRS, and a DMRS to which resource mapping in units of one symbol is applied, from among DMRSs, may be referred to as a single-symbol DMRS.

Both of the DMRSs may be mapped to one or more symbols per slot, depending on a length of a data channel. A DMRS mapped to a start location of a data symbol may be referred to as a front-loaded DMRS, and a DMRS additionally mapped to a location other than the location may be referred to as an additional DMRS.

In a case of DMRS configuration type 1 and a single-symbol DMRS, a Comb and a CS may be used for orthogonalization. For example, up to four antenna ports (APs) may be supported by using two types of Comb and two types of CS (Comb2 + 2CS).

In a case of DMRS configuration type 1 and a double-symbol DMRS, a Comb, a CS, and a TD-OCC may be used for orthogonalization. For example, up to eight APs may be supported by using two types of Comb, two types of CS, and a TD-OCC ({1, 1} and {1, -1}).

In a case of DMRS configuration type 2 and a single-symbol DMRS, an FD-OCC may be used for orthogonalization. For example, up to six APs may be supported by applying an orthogonal code (2-FD-OCC) to two resource elements (REs) adjacent to each other in a frequency direction.

In a case of DMRS configuration type 2 and a double-symbol DMRS, an FD-OCC and a TD-OCC may be used for orthogonalization. For example, up to 12 APs may be supported by applying an orthogonal code (2-FD-OCC) to 2 REs adjacent to each other in a frequency direction and applying a TD-OCC ({1, 1} and {1, -1}) to 2 REs adjacent to each other in a time direction.

In Rel-15 NR, for CSI-RSs with a plurality of ports, up to 32 ports are supported by using FDM, time division multiplexing (TDM), a frequency domain OCC, a time domain OCC, and the like. The same method as that for the above-described DMRS may also be applied to orthogonalization of the CSI-RS.

Incidentally, a DMRS port group orthogonalized by such an FD-OCC/TD-OCC as that described above is also referred to as a code division multiplexing (CDM) group.

Different CDM groups are FDMed, and thus are orthogonal to each other. On the other hand, there is a case where in the same CDM group, orthogonality of an applied OCC collapses due to channel variation or the like. In this case, receiving signals in the same CDM group with different received powers may cause the near-far problem, thereby preventing orthogonality from being assured.

Here, a TD-OCC/FD-OCC for a DMRS of Rel-15 NR will be described. A DMRS mapped to a resource element (RE) may correspond to a sequence obtained by multiplying a DMRS sequence by a parameter (which may be referred to as a sequence element or the like) w_{f}(k') for an FD-OCC and a parameter (which may be referred to as a sequence element or the like) wₜ(l') for a TD-OCC.

Both of the TD-OCC and FD-OCC for the DMRS of Rel-15 NR correspond to an OCC of a sequence length (which may be referred to as an OCC length) = 2. For example, Rel-15 type 1/type 2 DMRS ports may be defined by DMRS ports with an FD-OCC length 2 (for example, DMRS ports with FD-OCC length = 2).

Thus, possible values of each of k' and l' described above are 0 and 1. Multiplying this FD-OCC in units of an RE enables DMRSs with two ports to be multiplexed by using the same time and frequency resources (2 REs). Applying both of these FD-OCC and TD-OCC enables DMRSs with four ports to be multiplexed by using the same time and frequency resources (4 REs).

The two existing DMRS port tables for PDSCH (association between antenna port numbers and parameters) described above correspond to respective DMRS configuration types 1 and 2. Note that p and Δ indicate an antenna port number and a parameter for shifting (offsetting) a frequency resource, respectively.

For example, {w_{f}(0), w_{f}(1)} = {+1, +1} and {w_{f}(0), w_{f}(1)} = {+1, -1} are applied to antenna ports 1000 and 1001, respectively, thereby orthogonalizing the antenna ports by using an FD-OCC.

Δ of different values are applied to antenna ports 1000 to 1001 and antenna ports 1002 to 1003 (and antenna ports 1004 to 1005 in a case of type 2), thereby applying FDM to the antenna ports. Accordingly, antenna ports 1000 to 1003 (or 1000 to 1005) corresponding to a single-symbol DMRS are orthogonalized by using an FD-OCC and FDM.

{wₜ(0), wₜ(1)} = {+1, +1} and {wₜ(0), wₜ(1)} = {+1, -1} are applied to antenna ports 1000 to 1003 and antenna ports 1004 to 1007 of type 1, respectively, thereby orthogonalizing the antenna ports by using a TD-OCC. Accordingly, antenna ports 1000 to 1007 (or 1000 to 1011) corresponding to a double-symbol DMRS are orthogonalized by using an FD-OCC, a TD-OCC, and FDM.

For only CP-OFDM, it is studied that a larger number of orthogonal DMRS ports for DL/UL MU-MIMO is defined (without increasing DMRS overhead), that a common design is applied to DL and UL DMRSs, that up to 24 orthogonal DMRS ports are applied, and that for each applicable DMRS configuration type, a maximum number of orthogonal DMRS ports is doubled for both a single-symbol DMRS and a double-symbol DMRS.

In Rel. 15, Cases 1 to 4 below can be configured.

### {Case 1} Single-symbol DMRS of DMRS configuration type 1

A total number of DMRS ports is 2 (with comb/FDM) x 2 (with FD OCC) = 4 ports.

### {Case 2} Double-symbol DMRS of DMRS configuration type 1

A total number of DMRS ports is 2 (with comb/FDM) x 2 (with FD OCC) x 2 (with TD OCC) = 8 ports.

### {Case 3} Single-symbol DMRS of DMRS configuration type 2

A total number of DMRS ports is 3 (with FDM) x 2 (with FD OCC) = 6 ports.

### {Case 4} Double-symbol DMRS of DMRS configuration type 2

A total number of DMRS ports is 3 (with comb) x 2 (with FD OCC) x 2 (with TD OCC) = 12 ports.

For Rel. 18, it is studied that the total numbers of DMRS ports are doubled to 8, 16, 12, and 24 for Cases 1, 2, 3, and 4, respectively.

For the increased numbers of DMRS ports, the following five options (methods for increasing the number of DMRS ports) are under study.

### <Option 1>

- Introduction of a new OCC with a length (for example, 4 or 6) greater than that of an existing OCC.

In Option 1, items to be studied include a possibility of performance degradation, a possibility of scheduling restriction, backward compatibility, and the like in a case of a large delay spread.

### <Option 2>

- Use of a TD-OCC over a plurality of non-consecutive DMRS symbols (for example, a TD-OCC over a front-loaded DMRS/additional DMRS).

In Option 2, items to be studied include a possibility of performance degradation, a possibility of scheduling restriction (for example, a method for applying frequency hopping), a possibility of a limited DMRS configuration (for example, the number of additional DMRSs is limited), backward compatibility, and the like in a case of a high UE speed.

### <Option 3>

- Increasing the number of CDM groups (for example, increasing the number of combs/times of FDM).

In Option 3, items to be studied include a possibility of performance degradation, backward compatibility, and the like in a case of a large delay spread.

### <Option 4>

- Increasing the number of orthogonal DMRS ports by reusing additional DMRS symbols.

In Option 4, items to be studied include a possibility of performance degradation, a possibility of a limited DMRS configuration (for example, the number of additional DMRSs is limited), backward compatibility, and the like in a case of a high UE speed.

### <Option 5>

- Use of a TD-OCC over a plurality of non-consecutive DMRS symbols, the TD-OCC being combined with an FD-OCC/FDM (reusing additional DMRS symbols to improve channel estimation performance).

In Option 5, items to be studied include a possibility of performance degradation, a possibility of scheduling restriction (for example, a method for applying frequency hopping), a possibility of a limited DMRS configuration (for example, the number of additional DMRSs is limited), backward compatibility, and the like in a case of a high UE speed.

Option 1/3 may be supported. In addition, a TD OCC may be supported. A difference between Options 2 and 5 may be whether to support RRC-based semi-static switching between an FD-OCC and a TD-OCC or DCI-based dynamic switching between an FD-OCC and a TD-OCC.

In Option 5 for the methods for increasing the number of DMRS ports described above, a new length-4 FD-OCC may be applied, a new length-2 TD-OCC may be applied to a plurality of non-consecutive DMRS symbols, and the number of DMRS ports in one CDM group may be 4. In this case, a reception side decodes one of the FD-OCC and the TD-OCC, thereby allowing signals to be separated from each other, which has an advantage over Option 1/3. For example, the reception side can perform decoding by using only the FD-OCC when using the TD-OCC causes issues such as a case where a characteristic (orthogonality) deteriorates in high-speed movement, a case where channel estimation cannot be started even when only a front-loaded DMRS symbol is received, which requires an additional DMRS symbol to be received, thus leading to delay in PDSCH decoding, and the like. For example, the reception side can perform decoding by using only the TD-OCC when using the FD-OCC causes issues such as a case where a characteristic (orthogonality) deteriorates in a case of a large delay spread, and the like.

In Option 5 for increasing the number of DMRS ports described above, a new length-6 FD-OCC may be applied, and a new length-2 TD-OCC may be applied to a plurality of non-consecutive DMRS symbols.

In this manner, Rel. 18 or later versions supports a new FD-OCC longer than 2. DMRS ports for type 1/type 2 for Rel. 18 or later versions may be referred to as, for example, Rel-18 enhanced type 1/enhanced type 2 DMRS ports. Enhanced type 1/enhanced type 2 may be referred to as eType 1/eType 2.

For example, Rel-18 eType 1/eType 2 DMRS ports may be defined by DMRS ports with an FD-OCC length longer than 2 (for example, DMRS ports with FD-OCC length > 2). For example, the FD-OCC length for the Rel-18 eType 1/eType 2 DMRS ports may equal 4.

Note that a type 1/type 2 DMRS port with an FD-OCC length = 2 defined by Rel. 15 may be referred to as a Rel-15 type 1/type 2 DMRS port.

A Rel-18 eType 1 DMRS port may obtain port index p = #1000 to #1015. For example, the same DMRS port indices (DMRS ports #1000 to #1007) as those of Rel-15 DMRS ports may be used for DMRS ports with new FD-OCCs #0 and #1. DMRS port indices (DMRS ports #1008 to #1015, Rel-18 DMRS ports) different from those of Rel-15 DMRS ports may be used for DMRS ports with new FD-OCCs #2 and #3.

A Rel-18 eType 2 DMRS port may obtain port index p = #1000 to #1023. The same DMRS port indices (DMRS ports #1000 to #1011) as those of Rel-15 DMRS ports may be used for DMRS ports with new FD-OCCs #0 and #1. DMRS port indices (DMRS ports #1012 to #1023, Rel-18 DMRS ports) different from those of Rel-15 DMRS ports may be used for DMRS ports with new FD-OCCs #2 and #3.

For Rel. 18, as new OCCs for PDSCH/PUSCH DMRS (enhanced type 1/enhanced type 2 DMRS), a length-4 FD-OCC is supported.

In the present disclosure, an OCC (FD-OCC/TD-OCC) corresponding to OCC index i may be referred to as OCC #i.

Part of the plurality of sequences of the new FD-OCC may be associated with a Rel-15 DMRS port number/index.

In the present disclosure, an existing DMRS, an existing DMRS function, an existing DMRS type, an existing DMRS configuration type, dmrs-Type, DMRS configuration type 1/2, a DMRS with a length-2 FD-OCC, and Rel-15 DMRS type may be interchangeably interpreted. In the present disclosure, an existing DMRS configuration type being configured, existing DMRS configuration type 1 or 2 being configured, and no DMRS type being configured may be interchangeably interpreted. In the present disclosure, DMRS configuration type 1, DMRS type 1, DMRS type = 1, DMRS Type 1, and no dmrs-Type set to type 2 being configured may be interchangeably interpreted. In the present disclosure, DMRS configuration type 2, DMRS type 2, DMRS type = 2, DMRS Type 2, and dmrs-Type set to type 2 being configured may be interchangeably interpreted.

In the present disclosure, an enhanced DMRS, an enhanced DMRS function, an enhanced DMRS type, an enhanced DMRS configuration type, a configuration/higher layer parameter for enhanced DMRS type, an enhanced DMRS type, enhanced-dmrs-Type_r18, dmrs-TypeEnh, enhanced DMRS configuration type 1/2, a DMRS with a length-4 FD-OCC, and a Rel-18 DMRS type may be interchangeably interpreted. In the present disclosure, an enhanced DMRS configuration type being configured, enhanced-dmrs-Type_r18 being configured, enhanced DMRS configuration type 1 or 2 being configured, and an enhanced DMRS type being configured may be interchangeably interpreted. In the present disclosure, enhanced DMRS configuration type 1, DMRS enhanced type 1, DMRS enhanced type = 1, DMRS eType 1, and an enhanced DMRS type being configured and no dmrs-Type set to type 2 being configured may be interchangeably interpreted. In the present disclosure, enhanced DMRS configuration type 2, DMRS enhanced type 2, DMRS enhanced type = 2, DMRS eType 2, and an enhanced DMRS type being configured and dmrs-Type set to type 2 being configured may be interchangeably interpreted.

Enhanced DMRS configuration type 1 (DMRS enhanced type 1, DMRS enhanced type = 1, DMRS eType 1) uses frequency domain arrangement of DMRS configuration type 1 (DMRS type 1, DMRS type = 1, DMRS Type 1) and a new FD-OCC. Enhanced DMRS configuration type 2 (DMRS enhanced type 2, DMRS enhanced type = 2, DMRS eType 2) uses frequency domain arrangement of DMRS configuration type 2 (DMRS type 2, DMRS type = 2, DMRS Type 2) and a new FD-OCC.

In the present disclosure, a maximum DMRS length, maxLength, and the maximum number of OFDM symbols of a front-loaded DMRS may be interchangeably interpreted.

In the present disclosure, an existing OCC, an existing FD-OCC, a length-2 FD-OCC, a Rel-15 FD-OCC, and w_{f}(k') may be interchangeably interpreted. In the present disclosure, a new OCC, a new FD-OCC, an FD-OCC longer than 2, a Rel-18 FD-OCC, w_{f}(k'), and a length-4 FD-OCC may be interchangeably interpreted. In the present disclosure, a TD-OCC, wₜ(l'), and a length-2 TD-OCC may be interchangeably interpreted.

In the present disclosure, an existing DMRS port, a Rel-15 DMRS port, a DMRS port applied with an existing FD-OCC, and a DMRS port within a port number range of existing DMRSs may be interchangeably interpreted. In the present disclosure, a new DMRS port, a Rel-18 DMRS port, a DMRS port applied with a new FD-OCC, and a DMRS port outside a port number range of existing DMRSs may be interchangeably interpreted.

### (Configuration of Enhanced DMRS Configuration Type)

An RRC parameter for configuration of a Rel-18 DMRS (enhanced type 1/2) is under study.

A PDSCH configuration (PDSCH-Config) may include a downlink (DL) DMRS configuration (DMRS-DownlinkConfig) for configuration of a DMRS for PDSCH. DMRS-DownlinkConfig may include dmrs-Type, dmrs-AdditionalPosition, maxLength, scramblingID0, scramblingID1, phaseTrackingRS, and dmrs-Downlink-r16 and may further include enhanced-dmrs-Type_r18. dmrs-Downlink-r16 indicates whether a low-PAPR DMRS is used. In a case where dmrs-Downlink-r16 set to 'enabled' is present, the low-PAPR DMRS is used.

enhanced-dmrs-Type_r18 corresponds to selection of an enhanced DMRS type. In a case where no field for enhanced-dmrs-Type_r18 is present, a UE uses, depending on dmrs-Type, existing DMRS type 1 or existing DMRS type 2. In a case where a field for enhanced-dmrs-Type_r18 is present, the UE uses enhanced DMRS type 1 when no field for dmrs-Type set to type 2 is present in DMRS-DownlinkConfig, and the UE uses enhanced DMRS type 2 when a field for dmrs-Type set to type 2 is present in DMRS-DownlinkConfig.

A PUSCH configuration (PUSCH-Config) may include an uplink (UL) DMRS configuration (DMRS-UplinkConfig) for configuration of a DMRS for PUSCH. DMRS-UplinkConfig may include dmrs-Type, dmrs-AdditionalPosition, maxLength, transformPrecodingDisabled, and transformPrecodingEnabled. transformPrecodingDisabled may include scramblingID0, scramblingID1, and dmrs-Uplink-r16 and may further include enhanced-dmrs-Type_r18. dmrs-Uplink-r16 indicates whether a low-PAPR DMRS is used. In a case where dmrs-Uplink-r16 set to 'enabled' is present, the low-PAPR DMRS is used.

enhanced-dmrs-Type_r18 corresponds to selection of an enhanced DMRS type. In a case where no field for enhanced-dmrs-Type_r18 is present, the UE uses, depending on dmrs-Type, existing DMRS type 1 or existing DMRS type 2. In a case where there is a field for enhanced-dmrs-Type_r18, the UE uses enhanced DMRS type 1 when no field for dmrs-Type set to type 2 is present in DMRS-UplinkConfig, and the UE uses enhanced DMRS type 2 when a field for dmrs-Type set to type 2 is present in DMRS-UplinkConfig.

For a PDSCH of PDSCH mapping type A/B, the UE applies DMRS configuration type 1 to the DMRS of the PDSCH when no dmrs-Type set to type 2 is present in the DMRS downlink configuration (DMRS-DownlinkConfig) corresponding to the mapping type, and the UE applies DMRS configuration type 2 to the DMRS of the PDSCH when dmrs-Type set to type 2 is present in DMRS-DownlinkConfig corresponding to the mapping type. For a PUSCH of PUSCH mapping type A/B, the UE applies DMRS configuration type 1 to the DMRS of the PUSCH when no dmrs-Type set to type 2 is present in the DMRS uplink configuration (DMRS-UplinkConfig) corresponding to the mapping type, and the UE applies DMRS configuration type 2 to the DMRS of the PUSCH when dmrs-Type set to type 2 is present in DMRS-UplinkConfig corresponding to the mapping type.

### (CDM Group)

As described above, a plurality of DMRS ports mapped to the same RE (time and frequency resources) may be referred to as a DMRS CDM group.

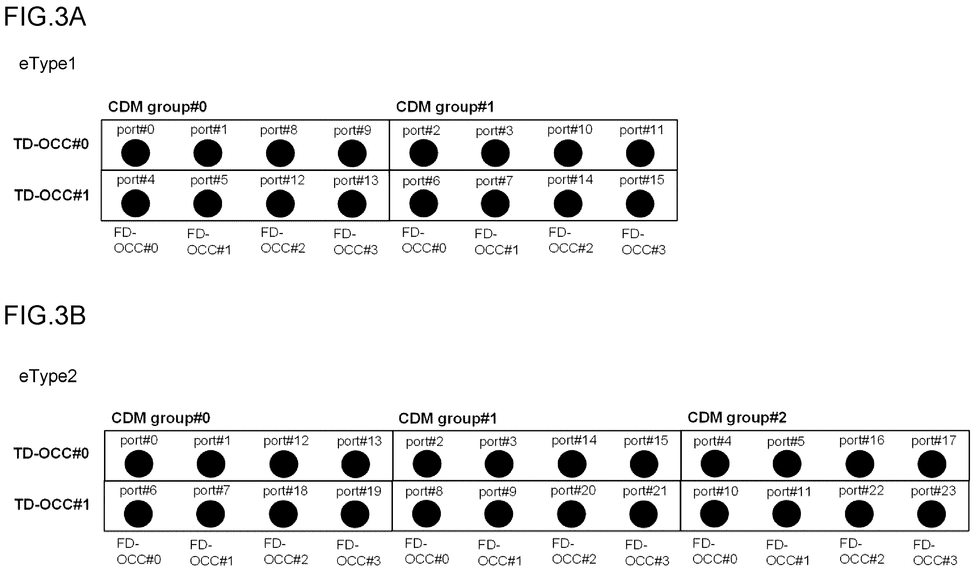

FIG. 3A is a diagram to show an example of association between CDM groups, DMRS ports, and OCCs in enhanced type 1. FIG. 3B is a diagram to show an example of association between CDM groups, DMRS ports, and OCCs in enhanced type 2. The DMRS ports of FIG. 3A and FIG. 3B may be referred to as enhanced DMRS ports. Note that FIG. 3A and FIG. 3B are applicable to both a single-symbol DMRS and a double-symbol DMRS.

As shown in FIG. 3A, for DMRS configuration enhanced type 1 and a single-symbol DMRS, eight DMRS ports (ports #0 to #3, #8 to #11) can be used. In each DMRS CDM group (each of CDM groups #0 and #1), four DMRS ports (ports #0, #1, #8, and #9, ports #2, #3, #10, and #11) are multiplexed by a length-4 FD-OCC (FD-OCCs #0 to #3). In a plurality of DMRS CDM groups (two DMRS CDM groups (CDM groups #0 and #1)), two DMRS ports are multiplexed by FDM.

As shown in FIG. 3A, in a case of DMRS configuration enhanced type 1 and a double-symbol DMRS, eight DMRS ports (ports #4 to #7, #12 to #15) can be further used. In each DMRS CDM group (each of CDM groups #0 and #1), four DMRS ports (ports #4, #5, #12, and #13, ports #6, #7, #14, and #15) are multiplexed by a length-4 FD-OCC (FD-OCCs #0 to #3). In a plurality of DMRS CDM groups (two DMRS CDM groups (CDM groups #0 and #1)), two DMRS ports are multiplexed by FDM. Furthermore, two DMRS ports in a time direction are multiplexed by a length-2 TD-OCC (TD-OCCs #0 and #1). In other words, a plurality of (two) CDM groups with the same index are multiplexed by TDM.

In enhanced type 1 shown in FIG. 3A, DMRS ports corresponding to CDM group #0 are {ports #0, #1, #8, #9} and {ports #4, #5, #12, #13} and DMRS ports corresponding to CDM group #1 are {ports #2, #3, #10, #11} and {ports #6, #7, #14, #15}.

As shown in FIG. 3B, for DMRS configuration enhanced type 2 and a single-symbol DMRS, twelve DMRS ports (ports #0 and #5, #12 to #17) can be used. In each DMRS CDM group (each of CDM groups #0 to #2), four DMRS ports (ports #0, #1, #12, and #13, ports #2, #3, #14, and #15, ports #4, #5, #16, and #17) are multiplexed by a length-4 FD-OCC (FD-OCCs #0 to #3). In a plurality of DMRS CDM groups (three DMRS CDM groups (CDM groups #0 to #2)), three DMRS ports are multiplexed by FDM.

As shown in FIG. 3B, in a case of DMRS configuration enhanced type 2 and a double-symbol DMRS, twelve DMRS ports (ports #6 to #11, #18 to #23) can be further used. In each DMRS CDM group (each of CDM groups #0 to #2), four DMRS ports (ports #6, #7, #18, and #19, ports #8, #9, #20, and #21, ports #10, #11, #22, and #23) are multiplexed by a length-4 FD-OCC (FD-OCCs #0 to #3). In a plurality of DMRS CDM groups (three DMRS CDM groups (CDM groups #0 to #2)), three DMRS ports are multiplexed by FDM. Furthermore, two DMRS ports in a time direction are multiplexed by a length-2 TD-OCC (TD-OCCs #0 and #1). In other words, a plurality of (two) CDM groups with the same index are multiplexed by TDM.

In enhanced type 2 shown in FIG. 3B, DMRS ports corresponding to CDM group #0 are {ports #0, #1, #12, #13} and {ports #6, #7, #18, #19}, DMRS ports corresponding to CDM group #1 are {ports #2, #3, #14, #15} and {ports #8, #9, #20, #21}, and DMRS ports corresponding to CDM group #2 are {ports #4, #5, #16, #17} and {ports #10, #11, #22, #23}.

### (DMRS Port Combination)

It is studied that, in antenna port indication for DMRS ports of enhanced type 1/enhanced type 2 for PUSCH with a maximum DMRS length = 1/2, all of DMRS port combinations of several categories below can be indicated.
(Category 1) A combination of a plurality of indices of existing DMRS ports (p = 0 to 7 for enhanced type 1, p = 0 to 11 for enhanced type 2).
(Category 2) A combination of a plurality of indices of new DMRS ports (p = 8 to 15 for enhanced type 1, p = 12 to 23 for enhanced type 2).
(Category 3) A combination of existing DMRS port indices and new DMRS port indices in one CDM group with at least a maximum DMRS length = 1 (combination of at least one of up to four ports from p = {0, 1, 8, 9} and up to four ports from p = {2, 3, 10, 11} for enhanced type 1, combination of at least one of up to four ports from p = {0, 1, 12, 13} and up to four ports from p = {2, 3, 14, 15} for enhanced type 2). Only one CDM group is used for rank 4 or less. More than one CDM group can be used for a rank greater than 4.

Similarly, a DMRS port for PDSCH is determined by p + 1000.

It is studied that, for DMRS ports of enhanced type 1/enhanced type 2 for PDSCH/PUSCH, a maximum DMRS length = 1 and a rank = 5, 6, 7, 8 are supported.

### (DCI Format)

The following several DCI formats are defined in a specification.
- DCI format 4_2. This DCI format is used for scheduling of a PDSCH for multicast in a DL cell. This DCI format includes an antenna port field for indication of one or more DMRS ports.
- DCI format 1_3. This DCI format is used for scheduling of one PDSCH in one cell or a plurality of PDSCHs in a plurality of cells by using one PDSCH for each cell. This DCI format includes an antenna port field for indication of one or more DMRS ports.
- DCI format 0_3. This DCI format is used for scheduling of one PDSCH in one cell or a plurality of PUSCHs in a plurality of cells by using one PUSCH for each cell. This DCI format includes an antenna port field for indication of one or more DMRS ports.

### (Issues)

A DMRS reception procedure for a PDSCH scheduled by a PDCCH with DCI format 1_1 is similarly applied to a PDSCH scheduled by a PDCCH with DCI format 1_2, by applying parameters for dmrs-DownlinkForPDSCH-MappingTypeA-DCI-1-2 and dmrs-DownlinkForPDSCH-MappingTypeB-DCI-1-2 instead of dmrs-DownlinkForPDSCH-MappingTypeA and dmrs-DownlinkForPDSCH-MappingTypeB, respectively. The DMRS reception procedure for a PDSCH scheduled by a PDCCH with DCI format 1_1 is similarly applied to a PDSCH scheduled by a PDCCH with DCI format 1_3.

A DMRS reception procedure for a PDSCH scheduled by a PDCCH with DCI format 1_1 is similarly applied to a PDSCH scheduled by a PDCCH with DCI format 4_2, by applying parameters for dmrs-DownlinkForPDSCH-MappingTypeA and dmrs-DownlinkForPDSCH-MappingTypeB in pdsch-ConfigMulticast instead of dmrs-DownlinkForPDSCH-MappingTypeA and dmrs-DownlinkForPDSCH-MappingTypeB in PDSCH-Config, respectively.

A DMRS transmission procedure for a PDSCH scheduled by a PDCCH with DCI format 0_1 is similarly applied to a PUSCH scheduled by a PDCCH with DCI format 0_2, by applying parameters for dmrs-UplinkForPUSCH-MappingTypeA-DCI-0-2 and dmrs-UplinkForPUSCH-MappingTypeB-DCI-0-2 instead of dmrs-UplinkForPUSCH-MappingTypeA and dmrs-UplinkForPUSCH-MappingTypeB, respectively. The DMRS transmission procedure for a PUSCH scheduled by a PDCCH with DCI format 0_1 is similarly applied to a PUSCH scheduled by a PDCCH with DCI format 0_3.

However, it is not clear whether DCI format 1_3 and DCI format 4_2 can indicate a new DMRS port similarly to an existing DMRS port. In view of this, unless the relationship between a DCI format for scheduling a PDSCH/PUSCH and a DMRS port indicated by the DCI format is sufficiently studied, communication quality/throughput may degrade.

Thus, the inventors of the present invention came up with the idea of a method of configuring/indicating a DMRS.

Embodiments according to the present disclosure will be described in detail with reference to the drawings as follows. Note that the embodiments (for example, respective cases) to be described below may each be used individually, or at least two of the embodiments may be employed in combination.

In the present disclosure, "A/B" and "at least one of A and B" may be interchangeably interpreted. In the present disclosure, "A/B/C" may mean "at least one of A, B, and C."

In the present disclosure, activate, deactivate, indicate, select, configure, update, determine, and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, and the like. In the present disclosure, RRC signaling, an RRC IE, an RRC parameter, and a higher layer parameter may be interchangeably interpreted.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the present disclosure, "having capability of ..." may be interchangeably interpreted as "supporting/reporting capability of ...."

In the present disclosure, a_{b}, a_b, and an expression of a with b added to the lower right of a may be interchangeably interpreted. In the present disclosure, a^{c}, a^c, and an expression of a with c added to the upper right of a may be interchangeably interpreted. In the present disclosure, a_{b}^{c}, a_b^c, and an expression of a with b added to the lower right of a and c added to the upper right of a may be interchangeably interpreted. In the present disclosure, ceil(x) and ceiling function may be interchangeably interpreted. In the present disclosure, floor(x) and floor function may be interchangeably interpreted. In the present disclosure, sqrt(x) and square root (root) may be interchangeably interpreted. In the present disclosure, x~ may be expressed as x with "~" added above x or may be referred to as x tilde. In the present disclosure, x⁻ may be expressed as x with "-" added above x or may be referred to as x bar. In the present disclosure, x mod y, mod(x, y), mod function, and modulo operation may be interchangeably interpreted.

In the present disclosure, a port, an antenna port, and a DMRS port may be interchangeably interpreted.

In the present disclosure, DMRS port (number) p for PUSCH and DMRS port (number) 1000 + p for PDSCH may be interchangeably interpreted.

### (Radio Communication Method)

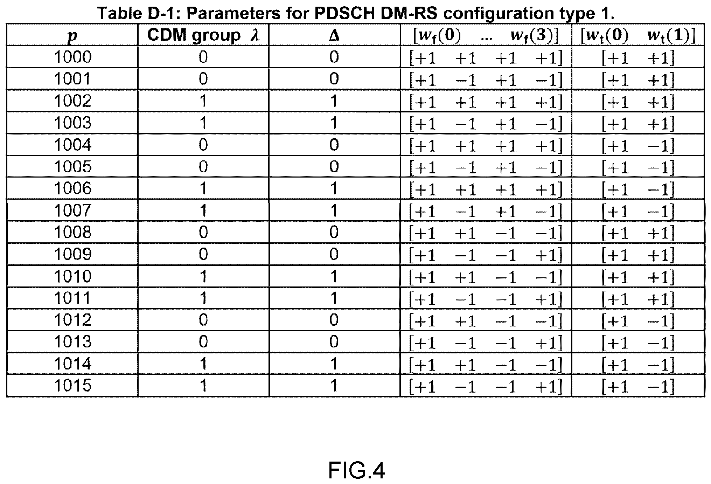

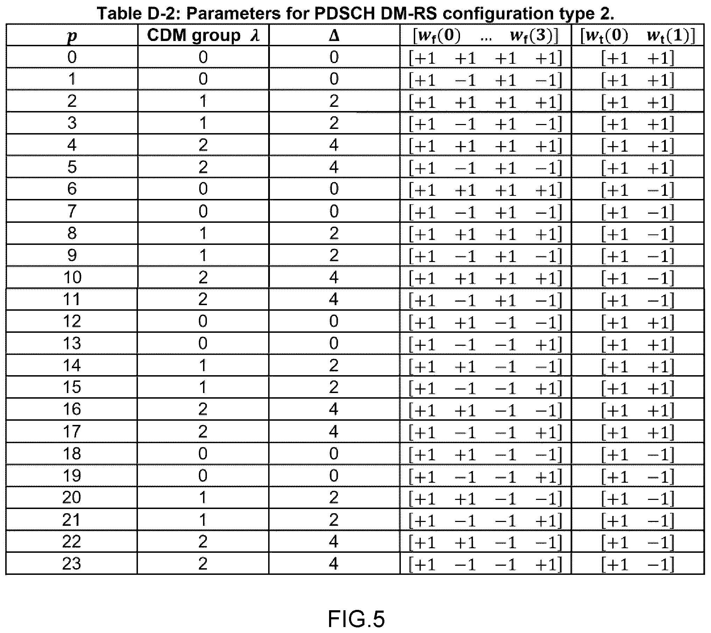

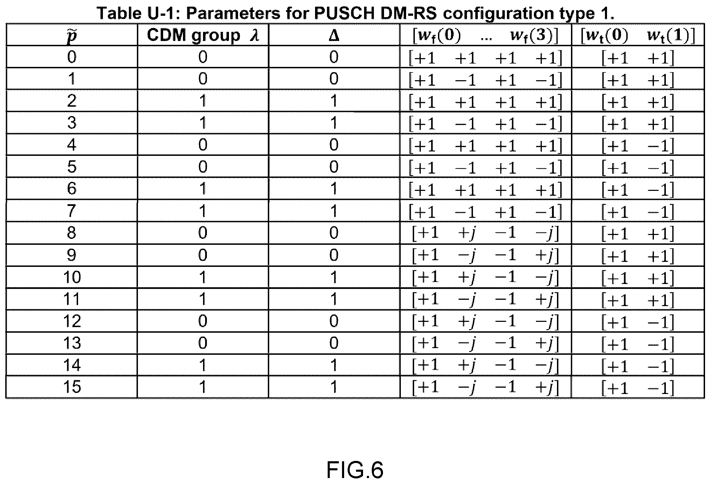

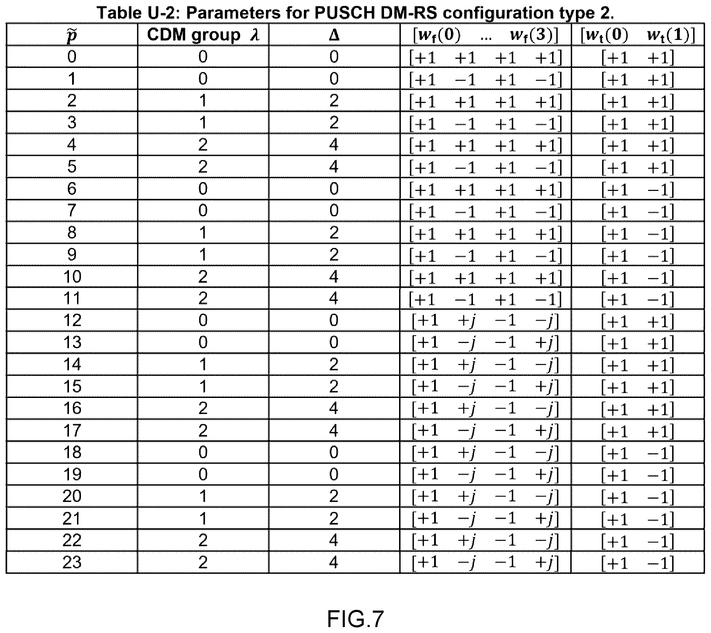

Table D-1 shown in FIG. 4 shows an example of parameters for PDSCH DMRS configuration type 1. Table D-2 shown in FIG. 5 shows an example of parameters for PDSCH DMRS configuration type 2. Table U-1 shown in FIG. 6 shows an example of parameters for PUSCH DMRS configuration type 1. Table U-2 shown in FIG. 7 shows an example of parameters for PUSCH DMRS configuration type 2. The parameters in each table include PDSCH DMRS port p or PUSCH DMRS port p, CDM group λ, Δ for frequency offset, FD-OCC W_{f}(k'), and TD-OCC Wₜ(l').

The UE applies λ, Δ, W_{f}(k'), and Wₜ(l') to each DMRS port p or p in a DMRS port combination corresponding to an antenna port field value. When no enhanced DMRS type (enhanced-dmrs-Type_r18 or dmrs-TypeEnh) is configured, length-2 FD-OCC W_{f}(k') corresponding to k' = 0, 1 is applied to a DMRS. When an enhanced DMRS type (enhanced-dmrs-Type_r18 or dmrs-TypeEnh) is configured, length-4 FD-OCC W_{f}(k') corresponding to k' = 0, 1, 2, 3 is applied to a DMRS.

As the DMRS port p/p in DMRS configuration type 1/2 for PDSCH/PUSCH, there are an existing DMRS port and a new DMRS port. The existing DMRS port is a DMRS port within a range of port numbers of existing DMRSs and corresponds to p = 1000 to 1007 in PDSCH DMRS configuration type 1, p = 0 to 7 in PUSCH DMRS configuration type 1, p = 1000 to 1011 in PDSCH DMRS configuration type 2, and p = 0 to 11 in PUSCH DMRS configuration type 2. The new DMRS port is a DMRS port outside the range of port numbers of existing DMRSs and corresponds to p = 1008 to 1015 in PDSCH DMRS configuration type 1, p = 8 to 15 in PUSCH DMRS configuration type 1, p = 1012 to 1023 in PDSCH DMRS configuration type 2, and p = 12 to 23 in PUSCH DMRS configuration type 2.

For a given configuration type, the first length-2 FD-OCC (k' = 0, 1) among the length-4 FD-OCCs (k' = 0, 1, 2, 3) corresponding to a given port number of the existing DMRS ports is the same as the length-2 FD-OCC corresponding to the same port number for the same configuration type of the existing DMRS (Rel. 15).

When no enhanced DMRS type (enhanced-dmrs-Type_r18 or dmrs-TypeEnh) is configured, a DMRS port combination from only the existing DMRS ports may be indicated by an antenna port field value. When an enhanced DMRS type (enhanced-dmrs-Type_r18 or dmrs-TypeEnh) is configured, a DMRS port combination from the existing DMRS ports and the new DMRS ports may be indicated by an antenna port field value.

### <Embodiment 1>

A specific DCI format other than DCI formats 1_1, 1_2, 0_1, and 0_2 may indicate a new DMRS port. The specific DCI format may exclude fallback DCI (DCI formats 0_0 and 1_0). The specific DCI format may be at least one of DCI formats 1_3 and 4_2. The specific DCI format may be at least one of DCI formats 1_3, 4_2, and 0_3.

DCI formats 1_1, 1_2, 0_1, and 0_2 and a specific DCI format other than DCI formats 1_0 and 0_0 may indicate new DMRS ports. The specific DCI format may indicate a new DMRS port by a procedure similar to that of at least one of DCI formats 1_1, 1_2, 0_1, and 0_2.

An enhanced DMRS type configuration (for example, enhanceddmrs-Type_r18) indicating that a new DMRS port can be applied to a shared channel scheduled by a DCI format may follow any of the following several options.
- Option 1: For each DCI format, enhanced-dmrs-Type_r18 is configured.
- Option 2: Common enhanced-dmrs-Type_r18 is configured for a plurality of DCI formats. For example, enhanced-dmrs-Type_r18 common to all DCI formats capable of indicating a new DMRS port may be configured.

A DL BWP-dedicated configuration (BWP-DownlinkDedicated type) may include a unicast configuration and a multicast configuration.

The unicast configuration may include a unicast PDSCH configuration (pdsch-Config, PDSCH-Config type). The unicast PDSCH may be a PDSCH scheduled by DCI format 1_0/1_1/1_2/1_3.

pdsch-Config may include at least one of the following several parameters 1-x.
- (1-1) dmrs-DownlinkForPDSCH-MappingTypeA. This parameter may have a DMRS-DownlinkConfig structure. This DMRS-DownlinkConfig may include at least one of the following several parameters 1-1-x.
   -- (1-1-1) dmrs-Type.
   -- (1-1-2) enhanced-dmrs-Type_r18.
- (1-2) dmrs-DownlinkForPDSCH-MappingTypeB. This parameter may have a DMRS-DownlinkConfig structure. This DMRS-DownlinkConfig may include at least one of the following several parameters 1-2-x.
   -- (1-2-1) dmrs-Type.
   -- (1-2-2) enhanced-dmrs-Type_r18.
- (1-3) dmrs-DownlinkForPDSCH-MappingTypeA-DCI-1-2-r16. This parameter may have a DMRS-DownlinkConfig structure. This DMRS-DownlinkConfig may include at least one of the following several parameters 1-3-x.
   -- (1-3-1) dmrs-Type.
   -- (1-3-2) enhanced-dmrs-Type_r18.
- (1-4) dmrs-DownlinkForPDSCH-MappingTypeB-DCI-1-2-r16. This parameter may have a DMRS-DownlinkConfig structure. This DMRS-DownlinkConfig may include at least one of the following several parameters 1-4-x.
   -- (1-4-1) dmrs-Type.
   -- (1-4-2) enhanced-dmrs-Type_r18.

A multicast configuration (cfr-ConfigMulticast, CFR-ConfigMulticast type) may include a multicast PDSCH configuration (pdsch-ConfigMulticast). A multicast PDSCH may be a PDSCH scheduled by DCI format 4_1/4_2. pdsch-ConfigMulticast may have a PDSCH-Config type, and the PDSCH-Config type of a case of being used for pdsch-ConfigMulticast need not include dmrs-DownlinkForPDSCH-MappingTypeA-DCI-1-2 and dmrs-DownlinkForPDSCH-MappingTypeB-DCI-1-2.

pdsch-ConfigMulticast may include at least one of the following several parameters 2-x.
- (2-1) dmrs-DownlinkForPDSCH-MappingTypeA. This parameter may have a DMRS-DownlinkConfig structure. This DMRS-DownlinkConfig may include at least one of the following several parameters 2-1-x.
   -- (2-1-1) dmrs-Type.
   -- (2-1-2) enhanced-dmrs-Type_r18.
- (2-2) dmrs-DownlinkForPDSCH-MappingTypeB. This parameter may have a DMRS-DownlinkConfig structure. This DMRS-DownlinkConfig may include at least one of the following several parameters 2-2-x.
   -- (2-2-1) dmrs-Type.
   -- (2-2-2) enhanced-dmrs-Type_r18.

The parameters 1-1/1-2/1-3/1-4/2-1/2-2 described above may have the same DMRS-DownlinkConfig structure or different DMRS-DownlinkConfig structures.

In a case where DCI format 4_2 schedules a PDSCH of a given PDSCH mapping type (A or B) and enhanced-dmrs-Type_r18 is configured (present) in DMRS-DownlinkConfig (dmrs-DownlinkForPDSCH-MappingTypeA or dmrs-DownlinkForPDSCH-MappingTypeB) corresponding to the mapping type in pdsch-ConfigMulticast, a UE may apply an enhanced DMRS to the PDSCH. In a case where DCI format 4_2 schedules a PDSCH of a given PDSCH mapping type (A or B) and no enhanced-dmrs-Type_r18 is configured (enhanced-dmrs-Type_r18 is absent) in DMRS-DownlinkConfig (dmrs-DownlinkForPDSCH-MappingTypeA or dmrs-DownlinkForPDSCH-MappingTypeB) corresponding to the mapping type in pdsch-ConfigMulticast, the UE may apply an existing DMRS to the PDSCH.

In a case where DCI format 1_1 schedules a PDSCH of a given PDSCH mapping type (A or B) and enhanced-dmrs-Type_r18 is configured (present) in DMRS-DownlinkConfig (dmrs-DownlinkForPDSCH-MappingTypeA or dmrs-DownlinkForPDSCH-MappingTypeB) corresponding to the mapping type in pdsch-Config, the UE may apply an enhanced DMRS to the PDSCH. In a case where DCI format 1_1 schedules a PDSCH of a given PDSCH mapping type (A or B) and no enhanced-dmrs-Type_r18 is configured (enhanced-dmrs-Type_r18 is absent) in DMRS-DownlinkConfig (dmrs-DownlinkForPDSCH-MappingTypeA or dmrs-DownlinkForPDSCH-MappingTypeB) corresponding to the mapping type in pdsch-Config, the UE may apply an existing DMRS to the PDSCH.

In a case where DCI format 1_2 schedules a PDSCH of a given PDSCH mapping type (A or B) and enhanced-dmrs-Type_r18 is configured (present) in DMRS-DownlinkConfig (dmrs-DownlinkForPDSCH-MappingTypeA-DCI-1-2-r16 or dmrs-DownlinkForPDSCH-MappingTypeB-DCI-1-2-r16) corresponding to the mapping type in pdsch-Config, the UE may apply an enhanced DMRS to the PDSCH. In a case where DCI format 1_2 schedules a PDSCH of a given PDSCH mapping type (A or B) and no enhanced-dmrs-Type_r18 is configured (enhanced-dmrs-Type_r18 is absent) in DMRS-DownlinkConfig (dmrs-DownlinkForPDSCH-MappingTypeA-DCI-1-2-r16 or dmrs-DownlinkForPDSCH-MappingTypeB-DCI-1-2-r16) corresponding to the mapping type in pdsch-Config, the UE may apply an existing DMRS to the PDSCH.

### <<Variation 1>>

In option 2 described above, common enhanced-dmrs-Type_r18 may be any one of parameters 1-1-2/1-2-2/1-3-2/1-4-2/2-1-2/2-2-2 described above.

In a case where at least one DCI format of DCI format 1_1 and another specific DCI format schedules a PDSCH of a given PDSCH mapping type (A or B) and enhanced-dmrs-Type_r18 is configured (present) in DMRS-DownlinkConfig (dmrs-DownlinkForPDSCH-MappingTypeA or dmrs-DownlinkForPDSCH-MappingTypeB) corresponding to the mapping type in pdsch-Config, a UE may apply an enhanced DMRS to the PDSCH. In a case where at least one DCI format of DCI format 1_1 and another specific DCI format schedules a PDSCH of a given PDSCH mapping type (A or B) and no enhanced-dmrs-Type_r18 is configured (enhanced-dmrs-Type_r18 is absent) in DMRS-DownlinkConfig (dmrs-DownlinkForPDSCH-MappingTypeA or dmrs-DownlinkForPDSCH-MappingTypeB) corresponding to the mapping type in pdsch-Config, the UE may apply an existing DMRS to the PDSCH. The UE may determine whether or not to apply an enhanced DMRS to a PDSCH scheduled by a specific DCI format, based on a configuration for a PDSCH scheduled by DCI format 1_1.

The UE may apply a parameter for a DMRS of a PDSCH scheduled by DCI format 1_1, to a DMRS of a PDSCH scheduled by a specific DCI format (for example, 1_3/4_2).

### <<Variation 2>>

A UE need not apply an enhanced DMRS to a PDSCH scheduled by a specific DCI format other than DCI format 1_1/1_2.

enhanced-dmrs-Type_r18 need not be configured in pdsch-ConfigMulticast. The UE may assume that no enhanced-dmrs-Type_r18 is configured (enhanced-dmrs-Type_r18 is absent) in pdsch-ConfigMulticast.

enhanced-dmrs-Type_r18 may be configured in pdsch-ConfigMulticast. When enhanced-dmrs-Type_r18 is configured (present) in pdsch-ConfigMulticast, the UE may ignore this enhanced-dmrs-Type_r18. In this case, the UE may apply an existing DMRS to a PDSCH scheduled by DCI format 4_2.

### <<Variation 3>>

The UL BWP-dedicated configuration (BWP-UplinkDedicated type) may include a PUSCH configuration (pusch-Config, PUSCH-Config type). A PUSCH may be a PUSCH scheduled by DCI format 0_1/0_2/0_3.

pusch-Config may include at least one of the following several parameters 3-x.
- (3-1) dmrs-UplinkForPUSCH-MappingTypeA. This parameter may have a DMRS-UplinkConfig structure. This DMRS-UplinkConfig may include at least one of the following several parameters 3-1-x.
   -- (3-1-1) dmrs-Type.
   -- (3-1-2) enhanced-dmrs-Type_r18.
- (3-2) dmrs-UplinkForPUSCH-MappingTypeB. This parameter may have a DMRS-UplinkConfig structure. This DMRS-UplinkConfig may include at least one of the following several parameters 3-2-x.
   -- (3-2-1) dmrs-Type.
   -- (3-2-2) enhanced-dmrs-Type_r18.
- (3-3) dmrs-UplinkForPUSCH-MappingTypeA-DCI-0-2-r16. This parameter may have a DMRS-UplinkConfig structure. This DMRS-UplinkConfig may include at least one of the following several parameters 3-3-x.
   -- (3-3-1) dmrs-Type.
   -- (3-3-2) enhanced-dmrs-Type_r18.
- (3-4) dmrs-UplinkForPUSCH-MappingTypeB-DCI-0-2-r16. This parameter may have a DMRS-UplinkConfig structure. This DMRS-UplinkConfig may include at least one of the following several parameters 3-4-x.
   -- (3-4-1) dmrs-Type.
   -- (3-4-2) enhanced-dmrs-Type_r18.

In a case where DCI format 0_1/0_3 schedules a PUSCH of a given PUSCH mapping type (A or B) and enhanced-dmrs-Type_r18 is configured (present) in DMRS-UplinkConfig (dmrs-UplinkForPUSCH-MappingTypeA or dmrs-UplinkForPUSCH-MappingTypeB) corresponding to the mapping type in pusch-Config, a UE may apply an enhanced DMRS to the PUSCH. In a case where DCI format 0_1/0_3 schedules a PUSCH of a given PUSCH mapping type (A or B) and no enhanced-dmrs-Type_r18 is configured (enhanced-dmrs-Type_r18 is absent) in DMRS-UplinkConfig (dmrs-UplinkForPUSCH-MappingTypeA or dmrs-UplinkForPUSCH-MappingTypeB) corresponding to the mapping type in pusch-Config, the UE may apply an existing DMRS to the PUSCH.

The UE may apply a parameter for a DMRS of a PUSCH scheduled by DCI format 0_1, to a DMRS of a PUSCH scheduled by a specific DCI format (for example, 0_3).

In a case where DCI format 0_2 schedules a PUSCH of a given PUSCH mapping type (A or B) and enhanced-dmrs-Type_r18 is configured (present) in DMRS-UplinkConfig (dmrs-UplinkForPUSCH-MappingTypeA-DCI-0-2-r16 or dmrs-UplinkForPUSCH-MappingTypeB-DCI-0-2-r16) corresponding to the mapping type in pusch-Config, the UE may apply an enhanced DMRS to the PUSCH. In a case where DCI format 0_2 schedules a PUSCH of a given PUSCH mapping type (A or B) and no enhanced-dmrs-Type_r18 is configured (enhanced-dmrs-Type_r18 is absent) in DMRS-UplinkConfig (dmrs-UplinkForPUSCH-MappingTypeA-DCI-0-2-r16 or dmrs-UplinkForPUSCH-MappingTypeB-DCI-0-2-r16) corresponding to the mapping type in pusch-Config, the UE may apply an existing DMRS to the PUSCH.

### <<Variation 4>>

Each embodiment may be applied to either or both of the PDSCH and PUSCH.

The PUSCH in each embodiment may be a PUSCH with transform precoding (DFT-s-OFDM) disabled (using CP-OFDM).

### <Supplements>

### {Notification of Information to UE}

Notification of any information to a UE (from a network (NW) (for example, a base station (BS))) (in other words, reception of any information from the BS in the UE) in the above-described embodiments may be performed by using physical layer signaling (for example, DCI), higher layer signaling (for example, RRC signaling, MAC CE), a specific signal/channel (for example, a PDCCH, a PDSCH, a reference signal), or any combination of these.

In a case where the notification is performed by a MAC CE, the MAC CE may be identified by a new logical channel ID (LCID) not defined in an existing standard being included in a MAC subheader.

In a case where the notification is performed by DCI, the notification may be performed by a specific field of the DCI, a radio network temporary identifier (RNTI) used for scrambling of cyclic redundancy check (CRC) bits given to the DCI, a format of the DCI, or the like.

Notification of any information to a UE in the above-described embodiments may be performed periodically, semipersistently, or aperiodically.

### {Notification of Information from UE}

Notification of any information from a UE (to an NW) (in other words, transmission/reporting of any information to the BS from the UE) in the above-described embodiments may be performed by using physical layer signaling (for example, UCI), higher layer signaling (for example, RRC signaling, MAC CE), a specific signal/channel (for example, a PUCCH, a PUSCH, a PRACH, a reference signal), or a combination of these.

In a case where the notification is performed by a MAC CE, the MAC CE may be identified by a new LCID not defined in existing standards being included in a MAC subheader.

In a case where the notification is performed by UCI, the notification may be transmitted by using a PUCCH or a PUSCH.

Notification of any information from a UE in the above-described embodiments may be performed periodically, semipersistently, or aperiodically.

### {Application of Each Embodiment}

At least one of the above-described embodiments may be applied to a case satisfying a specific condition. The specific condition may be defined in a specification, or may be notified to the UE/BS by using higher layer signaling / physical layer signaling. The specific condition may indicate at least one of the following:
- enabling of at least one of the above-described embodiments is configured

At least one of the above-described embodiments may be applied only to a UE that has reported a specific UE capability or that supports the specific UE capability. The specific UE capability may indicate at least one of the following:
- supporting, by a UE, of specific
   processing/operation/control/information for at least one of the above-described embodiments
- being capable of applying an enhanced DMRS port corresponding to a given DCI format. The UE capability for each DCI format may indicate whether or not the enhanced DMRS port is applicable to the PDSCH scheduled by the DCI format. For example, different from the UE capability indicating whether or not to be capable of applying an enhanced DMRS port to a PDSCH scheduled by DCI format 1_1/1_2, at least one of the UE capability indicating whether or not to be capable of applying an enhanced DMRS port to a PDSCH scheduled by DCI format 1_3 and the UE capability indicating whether or not to be capable of applying an enhanced DMRS port to a PDSCH scheduled by DCI format 4_2 may be defined/reported.
- being capable of applying enhanced DMRS ports corresponding to all DCI formats for scheduling of a PDSCH. One UE capability may indicate whether or not to be capable of applying enhanced DMRS ports to PDSCHs scheduled by the all DCI formats for scheduling a PDSCH.

The specific UE capability may be a capability applied over all the frequencies (in common irrespective of frequencies), capability per frequency (for example, one or any combination of cell, band, band combination, BWP, component carrier, and the like), capability per frequency range (for example, Frequency Range 1 (FR1), FR2, FR3, FR4, FR5, FR2-1, FR2-2), capability per subcarrier spacing (SCS), or capability per Feature Set (FS) or Feature Set Per Component-carrier (FSPC).

The specific UE capability may be a capability applied over all the duplex schemes (in common irrespective of duplex schemes) or capability per duplex scheme (for example, time division duplex (TDD) or frequency division duplex (FDD)).

At least one of the above-described embodiments may be applied to a case where specific information associated with the above-described embodiments (or operation for the above-described embodiments) is configured/activated/triggered for the UE by higher layer signaling/physical layer signaling. The specific information may indicate at least one of the following:
- information indicating enabling/disabling of the operation for the embodiment
- RRC parameter for a specific release (for example, Rel. 18/19) In Rel. YY (for example, YY is 18 or greater), an RRC parameter that enables operation XXX may be denoted by XXX_rYY (XXX-rYY).
- specific enhanced-dmrs-Type_r18 in DMRS-DownlinkConfig

In a case where the UE does not support at least one of the specific UE capability or is not configured with the specific information, the UE may apply, for example, Rel-15/16 operation.

### (Supplementary Notes)

Regarding one embodiment of the present disclosure, the following supplementary notes of the invention will be given.

### {Supplementary Note 1}

A terminal including:
a receiving section that receives a specific downlink control channel (DCI) format for scheduling a shared channel; and
a control section that applies a specific frequency domain (FD)-orthogonal cover code (OCC) with length 4 to a demodulation reference signal (DMRS) of the shared channel, wherein
the specific DCI format is a DCI format other than DCI formats 1_1, 1_2, 0_1, and 0_2.

### {Supplementary Note 2}

The terminal according to supplementary note 1, wherein
the receiving section receives a configuration of a DMRS for a specific shared channel mapping type corresponding to the specific DCI format, and
the configuration indicates that the specific FD-OCC is applied to the DMRS.

### {Supplementary Note 3}

The terminal according to supplementary note 1 or 2, wherein the shared channel is a multicast physical downlink shared channel (PDSCH).

### {Supplementary Note 4}

The terminal according to any one of supplementary notes 1 to 3, wherein the shared channel is a plurality of physical downlink shared channels (PDSCHs) across a plurality of cells, and one of the plurality of PDSCHs is scheduled for each of the plurality of cells.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

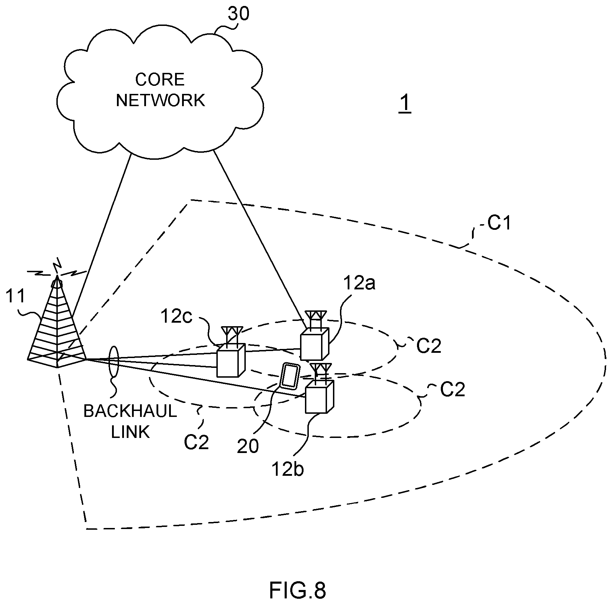

FIG. 8 is a diagram to show an example of a schematic structure of the radio communication system according to one embodiment. A radio communication system 1 (which may be simply referred to as a system 1) may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or lower (sub-6 GHz), and FR2 may be a frequency band higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The core network 30 may include network functions (NF), such as a User Plane Function (UPF), an Access and Mobility management Function (AMF), a Session Management Function (SMF), Unified Data Management (UDM), an Application Function (AF), a Data Network (DN), a Location Management Function (LMF), and operation, administration, and maintenance (Management) (OAM), for example. Note that a plurality of functions may be provided by one network node. Communication with an external network (for example, the Internet) may be performed via the DN.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data," and the PUSCH may be interpreted as "UL data."

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a given search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cellspecific reference signal (CRS), a channel state informationreference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

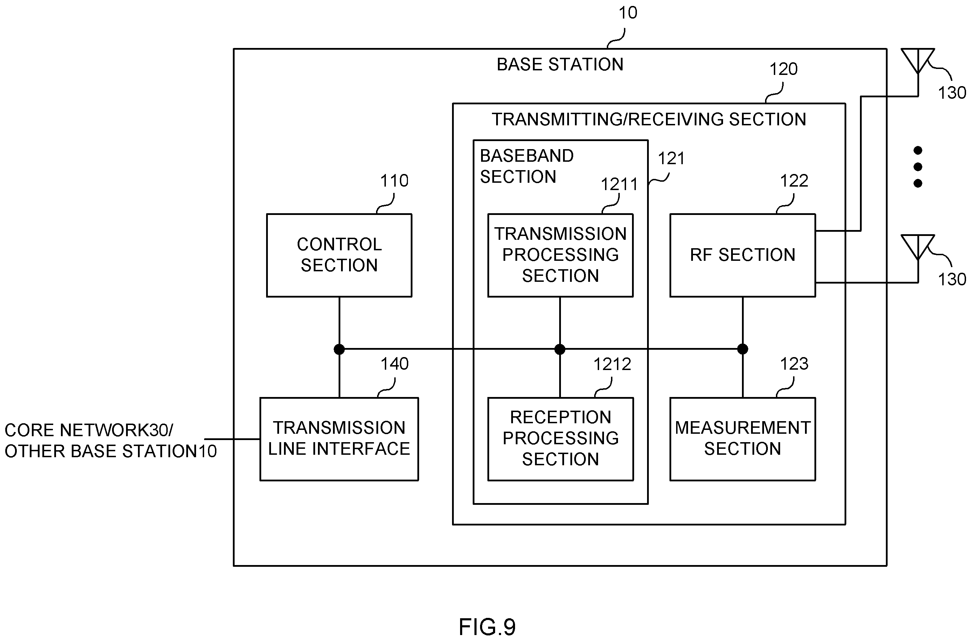

FIG. 9 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analogdigital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 (for example, a network node providing NF) or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The transmitting/receiving section 120 may transmit a specific downlink control channel (DCI) format for scheduling a shared channel. The control section 110 may apply a specific frequency domain (FD)-orthogonal cover code (OCC) with length 4 to a demodulation reference signal (DMRS) of the shared channel. The specific DCI format may be a DCI format other than DCI formats 1_1, 1_2, 0_1, and 0_2.

### (User Terminal)

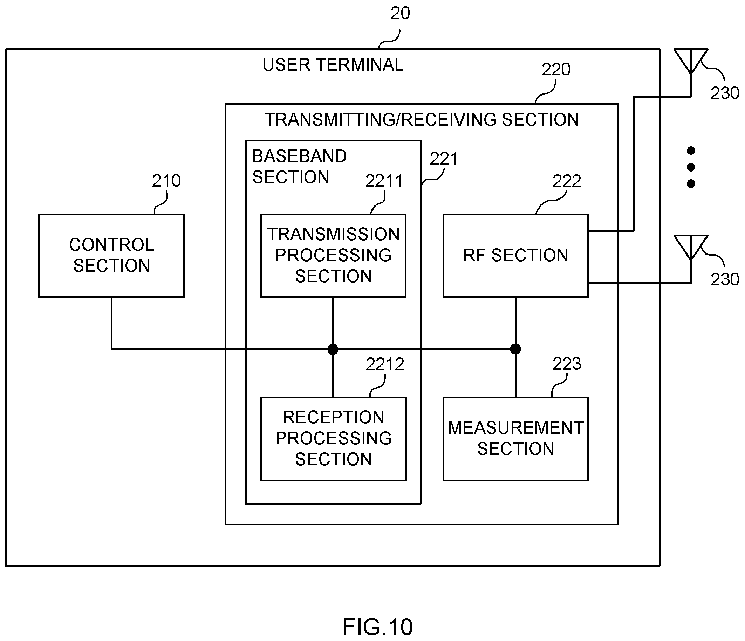

FIG. 10 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a given channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analogdigital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the measurement section 223 may derive channel measurement for CSI computation, based on a resource for channel measurement. The resource for channel measurement may be, for example, a non zero power (NZP) CSI-RS resource. The measurement section 223 may derive interference measurement for CSI computation, based on a resource for interference measurement. The resource for interference measurement may be at least one of an NZP CSI-RS resource for interference measurement, a CSI-interference measurement (IM) resource, and the like. Note that the CSI-IM may be referred to as CSI-interference management (IM). The CSI-IM and a zero power (ZP) CSI-RS may be interchangeably interpreted. Note that, in the present disclosure, a CSI-RS, an NZP CSI-RS, a ZP CSI-RS, a CSI-IM, a CSI-SSB, and the like may be interchangeably interpreted.

Note that the transmitting section and the receiving section of the user terminal 20 in the present disclosure may be constituted with at least one of the transmitting/receiving section 220 and the transmitting/receiving antennas 230.

The transmitting/receiving section 220 may receive a specific downlink control channel (DCI) format for scheduling a shared channel. The control section 210 may apply a specific frequency domain (FD)-orthogonal cover code (OCC) with length 4 to a demodulation reference signal (DMRS) of the shared channel. The specific DCI format may be a DCI format (for example, at least one of DCI formats 4_2, 1_3, and 0_3) other than DCI formats 1_1, 1_2, 0_1, and 0_2.

The transmitting/receiving section 220 may receive a configuration of a DMRS for a specific shared channel mapping type (for example, PDSCH mapping type A/B, PUSCH mapping type A/B) corresponding to the specific DCI format. The configuration may indicate that the specific FD-OCC is applied to the DMRS (for example, an enhanced DMRS type).

The shared channel may be a multicast physical downlink shared channel (PDSCH).

The shared channel may be a plurality of physical downlink shared channels (PDSCHs) across a plurality of cells. One of the plurality of PDSCHs may be scheduled for each of the plurality of cells.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

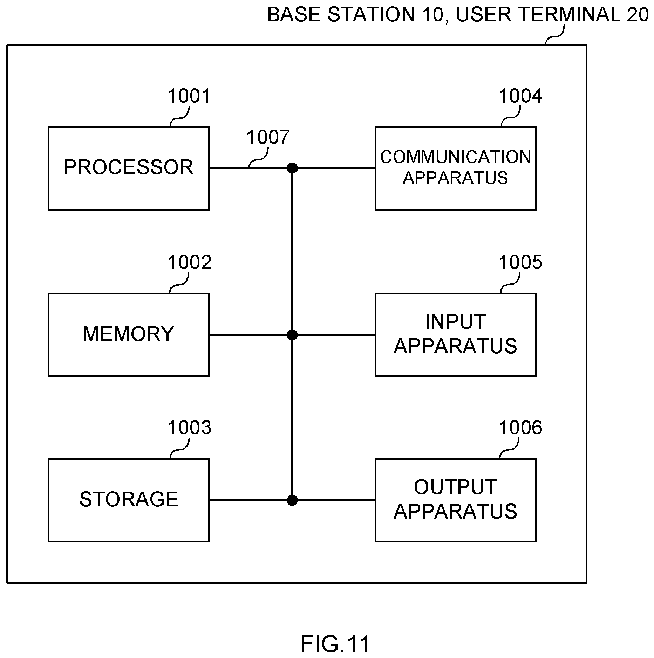

For example, a base station, a user terminal, and so on according to one embodiment of the present disclosure may function as a computer that executes the processes of the radio communication method of the present disclosure. FIG. 11 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing given software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these pieces of hardware.

### (Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a given signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably used.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for given numerology in a given carrier. Here, a common RB may be specified by an index of the RB based on the common reference point of the carrier. A PRB may be defined by a given BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a given signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to given values, or may be expressed using another corresponding information. For example, a radio resource may be specified by a given index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names allocated to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs).

Also, notification of given information (for example, notification of "X") does not necessarily have to be performed explicitly, and can be performed implicitly (by, for example, not reporting this given information or reporting another piece of information).

A decision may be realized by a value (0 or 1) represented by one bit, by a boolean value (true or false), or by comparison of numerical values (e.g., comparison with a given value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", a "layer", "the number of layers", a "rank", a "resource", a "resource set", a "beam", a "beam width", a "beam angular degree", an "antenna", an "antenna element", a "panel", a "UE panel", a "transmission entity", a "reception entity", and so on may be used interchangeably.

Note that, in the present disclosure, the "antenna port" may be used interchangeably with an "antenna port for an arbitrary signal/channel" (for example, a demodulation reference signal (DMRS) port). In the present disclosure, the "resource" may be used interchangeably with a "resource for an arbitrary signal/channel" (e.g., a reference signal resource, an SRS resource, and the like). The resource may include time/frequency/code/space/power resource. The spatial domain transmission filter may include at least one of a spatial domain transmission filter and a spatial domain reception filter.

The group may include at least one of, for example, a spatial relationship group, a code division multiplexing (CDM) group, a reference signal (RS) group, a control resource set (CORESET) group, a PUCCH group, an antenna port group (for example, a DMRS port group), a layer group, a resource group, a beam group, an antenna group, a panel group, and the like.

In the present disclosure, a "beam", an "SRS resource indicator (SRI)", a "CORESET", a "CORESET pool", a "PDSCH", a "PUSCH", a "codeword (CW)", a "transport block (TB)", an "RS", and the like may be interchangeably used.

In the present disclosure, a "TCI state", a "downlink TCI state (DL TCI state)", an "uplink TCI state (UL TCI state)", a "unified TCI state", a "common TCI state", a "joint TCI state", and the like may be used interchangeably.

In the present disclosure, "QCL", "QCL assumption", "QCL relationship", "QCL type information", "QCL property/properties", "specific QCL type (e.g., type A, type D) property", "specific QCL type (e.g., type A, type D)", and the like may be used interchangeably.

In the present disclosure, an "index", an "identifier (ID)", an "indicator", "indication", a "resource ID", and the like may be used interchangeably. In the present disclosure, a sequence, a list, a set, a group, a cluster, a subset, and the like may be used interchangeably.

A spatial relation information identifier (ID) (TCI state ID) and spatial relation information (TCI state) may be interchangeably used. "Spatial relation information (TCI state)" may be used interchangeably with "a set of spatial relation information (TCI state)", "one or a plurality of spatial relation information", and the like. The TCI state and the TCI may be used interchangeably. The spatial relation information and the spatial relation may be used interchangeably.

In the present disclosure, the terms such as a "base station (BS)", a "radio base station", a "fixed station," a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be interchangeably interpreted as instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

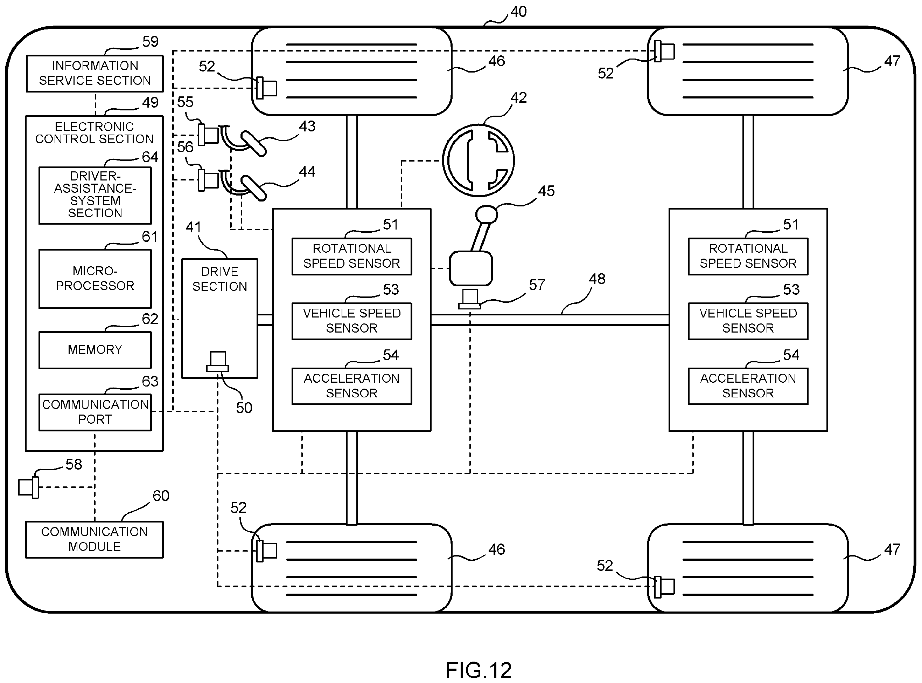

FIG. 12 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes: various devices for providing (outputting) various pieces of information such as driving information, traffic information, and entertainment information, such as a car navigation system, an audio system, a speaker, a display, a television, and a radio; and one or more ECUs that control these devices. The information service section 59 provides various pieces of information/services (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes: various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may control the driving section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about judging, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions(determinations)" about resolving, selecting, choosing, establishing, comparing, and so on. In other words, "deciding (determining)" may be interpreted to mean making "decisions (determinations)" about some action. In the present disclosure, "decide/deciding (determine/determining)" may be interchangeably interpreted as the above-described actions.

In the present disclosure, "decide/deciding (determine/determining)" may be used interchangeably with "assume/assuming", "expect/expecting", "consider/considering", and the like. Note that, in the present disclosure, "not expect to" may be used interchangeably with "expect not to".

In the present disclosure, "expect" may be used interchangeably with "be expected". For example, "expect(s) ..." ("..." may be expressed using, for example, a that-clause, a to-infinitive, or the like) may be used interchangeably with "be expected ...". "Does not expect ..." may be used interchangeably with "be not expected ...". Furthermore, "an apparatus A is not expected ..." may be used interchangeably with "an apparatus B other than the apparatus A does not expect ... for the apparatus A" (for example, when the apparatus A is a UE, the apparatus B may be a base station).

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", "wide", "narrow", and the like may be used interchangeably irrespective of positive degree, comparative degree, and superlative degree. In the present disclosure, expressions obtained by adding "i-th" (i is any integer) to words such as "good", "bad", "large", "small", "high", "low", "early", "late", "wide", "narrow", and the like may be used interchangeably irrespective of positive degree, comparative degree, and superlative degree (for example, "best" may be used interchangeably with "i-th best", and vice versa).

In the present disclosure, "of", "for", "regarding", "related to", "associated with", and the like may be used interchangeably.

In the present disclosure, "when A, B", "if A, (then) B", "B upon A", "B in response to A", "B based on A", "B during/while A", "B before A", "B (at the same time as)/on A", "B after A", "B since A", "B until A", and the like may be used interchangeably. Note that A and B here may be replaced with appropriate expressions such as nouns, dynamic nouns, and normal sentences, as appropriate, depending on the context. The time difference between A and B may be substantially 0 (immediately after or immediately before). A time offset may be applied to the time at which A occurs. For example, "A" may be used interchangeably with "before/after the time offset at which A occurs". The time offset (for example, one or more symbols/slots) may be defined in advance or may be specified by the UE based on the notified information.

In the present disclosure, timing, time point, time, time instance, any time unit (e.g., slot, sub-slot, symbol, subframe), period, occasion, a resource, or the like may be used interchangeably.

Now, although the invention according to the present disclosure has been described in detail above, it is apparent to a person skilled in the art that the invention according to the present disclosure is by no means limited to the embodiments described in the present disclosure. The description of the present disclosure is provided only for the purpose of explaining examples, and should by no means be construed to limit the invention according to the present disclosure in any way.

This application is based on and claims priority to Japanese Patent Application No. 2023-174990, filed on October 10, 2023, the contents of which are incorporated herein by reference in their entirety.

## Claims

1. A terminal comprising:
a receiving section that receives a specific downlink control channel (DCI) format for scheduling a shared channel; and
a control section that applies a specific frequency domain (FD)-orthogonal cover code (OCC) with length 4 to a demodulation reference signal (DMRS) of the shared channel, wherein
the specific DCI format is a DCI format other than DCI formats 1_1, 1_2, 0_1, and 0_2.

2. The terminal according to claim 1, wherein
the receiving section receives a configuration of a DMRS for a specific shared channel mapping type corresponding to the specific DCI format, and
the configuration indicates that the specific FD-OCC is applied to the DMRS.

3. The terminal according to claim 1, wherein
the shared channel is a multicast physical downlink shared channel (PDSCH).

4. The terminal according to claim 1, wherein
the shared channel is a plurality of physical downlink shared channels (PDSCHs) across a plurality of cells, and one of the plurality of PDSCHs is scheduled for each of the plurality of cells.

5. A radio communication method for a terminal, the radio communication method comprising:
receiving a specific downlink control channel (DCI) format for scheduling a shared channel; and
applying a specific frequency domain (FD)-orthogonal cover code (OCC) with length 4 to a demodulation reference signal (DMRS) of the shared channel, wherein
the specific DCI format is a DCI format other than DCI formats 1_1, 1_2, 0_1, and 0_2.

6. A base station comprising:
a transmitting section that transmits a specific downlink control channel (DCI) format for scheduling a shared channel; and
a control section that applies a specific frequency domain (FD)-orthogonal cover code (OCC) with length 4 to a demodulation reference signal (DMRS) of the shared channel, wherein
the specific DCI format is a DCI format other than DCI formats 1_1, 1_2, 0_1, and 0_2.
